# EUROPEAN PATENT SPECIFICATION

(11) **EP 0 694 773 B1**
(45) Date of publication and mention of the grant of the patent: **24.06.1998**
(21) Application number: 95113826.2
(22) Date of filing: 08.04.1992
(51) Int. Cl.: G01L 23/10, G01L 23/22

(54) **Device for detecting change in internal pressure of cylinder**
Vorrichtung zur Erfassung von Zylinderinnendruckänderungen
Dispositif de détection de la variation de la pression interne d'un cylindre

(30) Priority: 09.04.1991 JP 166941/91; 23.10.1991 JP 305232/91; 06.11.1991 JP 319907/91; 25.04.1991 JP 39033/91
(43) Date of publication of application: 31.01.1996
(62) Divisional of application: 92303098.5
(73) Proprietor: NGK SPARK PLUG CO., LTD, Nagoya-shi Aichi-ken (JP)
(72) Inventor: Kojima, Takao, Nagoya-shi, Aichi-ken (JP); Matsubara, Yoshiaki, Nagoya-shi, Aichi-ken (JP); Kondo, Mitsuru, Nagoya-shi, Aichi-ken (JP)
(74) Representative: Muir, Ian R.

(56) References cited:
- EP-A- 0 510 515
- DE-A- 3 025 808
- US-A- 4 566 316

## Description

### Background of the Invention

This invention relates generally to a device for detecting a change in internal pressure of a cylinder and, more specifically, to a mounting structure of a piezoelectric sensor mounted to a cylinder head of an internal combustion engine to detect a change in pressure within the cylinder caused by knocking or fuel injection. The present invention is also directed to a method of the manufacture of a piezoelectric sensor.

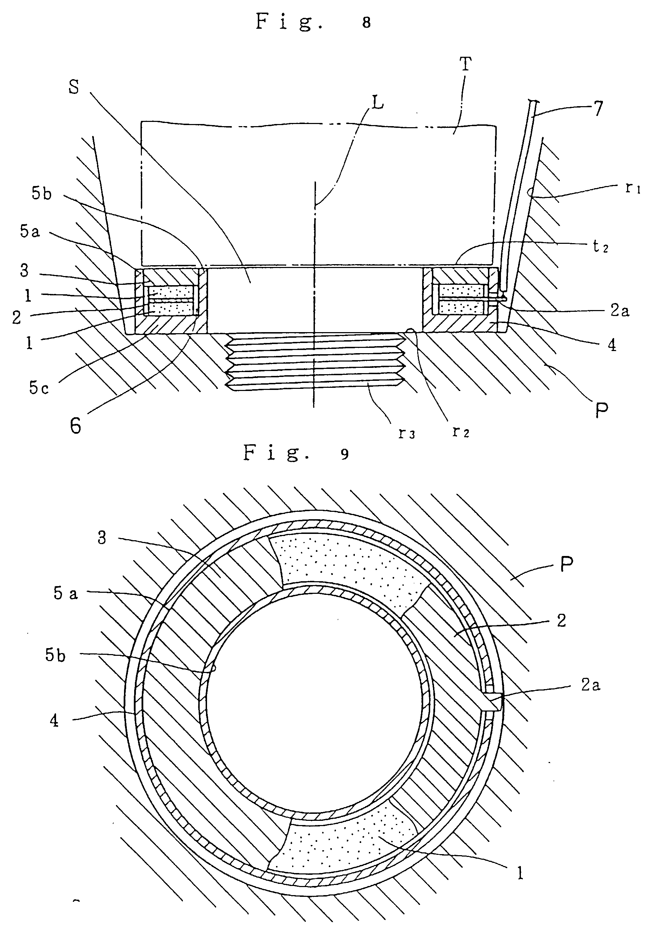

One known internal pressure detecting device is illustrated in Figs. 8 and 9. Designated as S is an annular piezoelectric sensor composed of a metal shell surrounding a laminate including an annular piezoelectric element and upper and lower cushioning rings. The sensor S is fixed on a plug seat r₂ by tightening with an ignition plug T so that the pressure change within the cylinder is transmitted to the sensor S as a mechanical strain to cause the sensor S to output a corresponding electrical signal. More particularly, the cylinder head P is provided with a plug insertion hole r₁ having the plug seat r₂ and an internally threaded portion r₃. The ignition plug T has a stepped portion t₂ engageable with the plug seat r₂ and an externally threaded tip end portion threadingly engageable with the internally threaded portion r₃, so that when the plug T is screwed in the plug hole r₁, the sensor S disposed on the plug seat r₂, optionally through a gasket, is tightly fixed thereon. The shell 4 of the sensor S is composed of an outer ring plate 5a, an inner ring plate 5b and an annular bottom plate 5c by which an annular space 6 is defined. Disposed in the space 6 are a pair of annular piezoelectric elements 1 and 1, an annular electrode plate 2 interposed between the piezoelectric elements 1 and 1, and a top cushioning ring 3. These parts are coaxially aligned and integrally united with an adhesive or by caulking. The electrode ring 2 has a portion 2a which extends radially outwardly through the outer ring plate 5a and to which a lead wire 7 is electrically connected to send an electrical signal from the sensor S to a suitable signal detecting device (not shown).

In the above mounting structure, the sensor S is pressed between the plug seat r₂ of the plug insertion hole r₁ and the stepped portion t₂ of the plug T. Thus, the tightening torque of the plug T is acted on the sensor S directly or indirectly through a gasket. Since such a torque includes both axial compression stress and tortional or twisting stress, the sensor S which has relatively low shearing strength tends to be broken or damaged and its piezoelectric characteristics deteriorate. To cope with this problem, a stopper is disposed for preventing the rotation of the sensor S at the time of the mounting on the cylinder head P. The use of such a stopper, however, is disadvantageous from the standpoint of economy and productivity because the mounting structure becomes unavoidably complicated. Further, the use of a stopper results in the increase in distance between the top surface of the sensor S and the plug seat r₂ so that it becomes difficult to locate the tip end of the plug P, at which spark discharge takes place, at an appropriate position.

US 4566316 discloses a washer-type pressure sensor for attachment to an opening for inserting an ignition plug of an engine. The opening is an eccentric bore and the sensor is shaped in such a way that it is prevented from rotation when the ignition plug is tightened. The sensor has a pair of ring piezoelectric elements opposed to each other through a ring electrode, and a first and second pressure receiving plate opposed to each other through the piezoelectric elements and disposed in mechanically and electrically close contact with the piezoelectric elements. An end portion of a cylindrically protecting portion of the first pressure receiving plate is bent toward the second pressure receiving plate to be caulked on a bevelled inner periphery of the second pressure receiving plate so that the electrode plate, piezoelectric element and insulator are fastened between the first and second pressure receiving plates.

US 4686861 relates to a pressure sensor mounted on a vibrating body having a piezoelectric element to detect pressure fluctuations, the pressure sensor having a metal case and an integrated body comprising piezoelectric elements and a presser metal portion placed between the piezoelectric element and the seam of the metal case, the seam of the wrapping being placed on the surface under pressure.

The present invention seeks to provide a cylinder internal pressure change detecting device which is devoid of the drawbacks of the known device.

The present invention also seeks to provide a device of the above-mentioned type which does not use a specific stopper and which can prevent a twisting stress from acting on the piezoelectric sensor during the mounting thereof on the cylinder head.

The present invention further seeks to provide a device of the above-mentioned type which is easily fabricated.

According to the present invention, there is provided a device for detecting a change in internal pressure of a cylinder, comprising
a cylinder head;
an axially extending ignition plug including a large diameter periphery portion, a small diameter periphery portion extending coaxially from an edge of said large diameter portion to form an annular stepped portion on said edge, and an externally threaded tip end portion coaxially extending from said small diameter periphery portion;
a plug insertion hole formed in said cylinder head for receiving part of said ignition plug and having an internally threaded portion adapted to be in threading engagement with said externally threaded tip end portion of said ignition plug and a plug seat engageable with said annular stepped portion of said ignition plug, said plug insertion hole having a circular inside peripheral portion whose center is deviated from the axis of said internally threaded portion of said plug hole; and
an annular piezoelectric sensor disposed on said plug seat and having an opening whose diameter is greater than that of said small diameter periphery portion of said ignition plug but smaller than the large diameter periphery portion thereof, so that said ignition plug is capable of being fixed on said cylinder head when screwed into said plug insertion hole with said piezoelectric sensor being tightly pressed between said annular stepped portion of said ignition plug and said plug seat of said plug insertion hole to detect a change in pressure within said cylinder;
characterised in that
an annular gasket interposed between said piezoelectric sensor and said stepped portion of said ignition plug, said annular gasket having such a peripheral portion that the distance between the edge of said peripheral portion of said gasket and the axis of said internally threaded portion of said plug hole is greater than the shortest distance between the axis of said internally threaded portion and the circular inside periphery of said plug insertion hole, so that said protruded portion of said gasket is brought into engagement with the circular inside periphery of said plug insertion hole upon rotation thereof about the axis of said internally threaded portion of said plug insertion hole.

Other features and advantages of the present invention will become apparent from the detailed description of the preferred embodiments of the invention which follows, when considered in the light of the accompanying drawings, in which:
Fig. 1 is a fragmentary, cross-sectional, elevational view diagrammatically showing a cylinder internal pressure change detecting device;
Fig. 2 is a cross-sectional plan view of the device of Fig. 1;
Fig. 3 is a fragmentary, cross-sectional, elevational view diagrammatically showing an embodiment of cylinder internal pressure change detecting device according to the present invention using a gasket;
Fig. 4 is a fragmentary, cross-sectional, plan view of the device of Fig. 3;
Fig. 5 is a fragmentary, cross-sectional, plan view, similar to Fig. 4, diagrammatically showing a second embodiment of the gasket-type device;
Fig. 6 is a fragmentary, cross-sectional, plan view, similar to Fig. 4, diagrammatically showing a third embodiment of the gasket-type device;
Fig. 7 is a fragmentary, cross-sectional, plan view, similar to Fig. 4, diagrammatically showing a fourth embodiment of the gasket-type device;
Fig. 8 is a fragmentary, cross-sectional, elevational view, similar to Fig. 1, diagrammatically showing a conventional pressure change detector; and
Fig. 9 is a cross-sectional, plan view, similar to Fig. 2, of the device of Fig. 8.

### Detailed Description of the Preferred Embodiments of the Invention

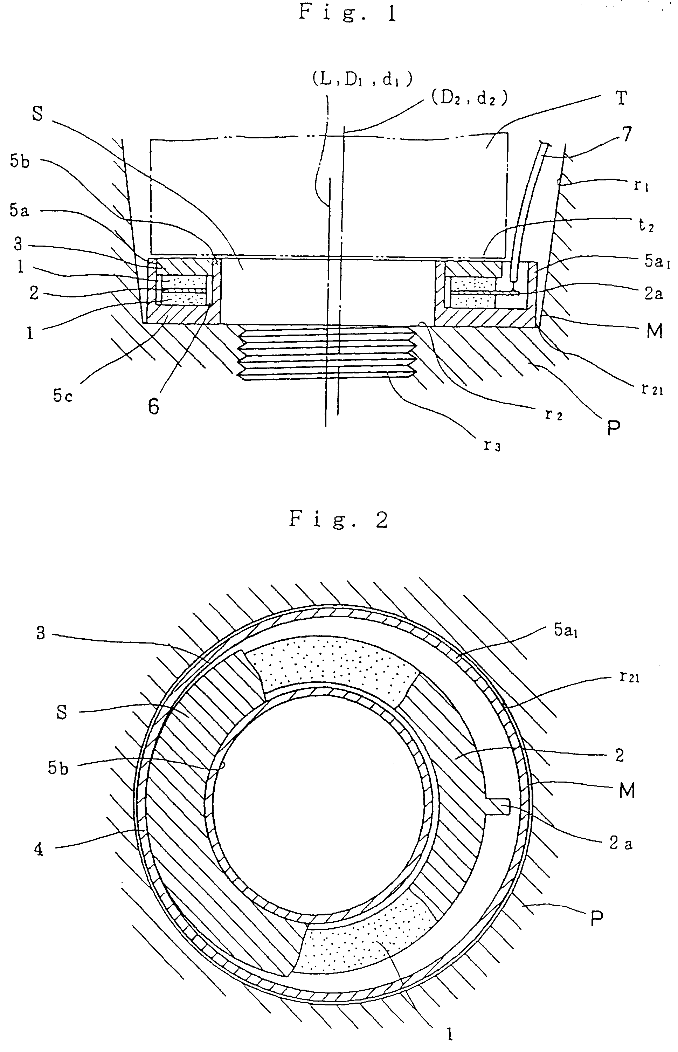

Figs. 1 and 2 depict a first cylinder internal pressure detecting device.

In the Figs. 1 and 2 as well as other Figures, the same reference numerals refer to similar component parts. Thus, designated as T is an axially extending ignition plug including a large diameter periphery portion, a small diameter periphery portion extending coaxially from an edge of the large diameter portion to form an annular stepped portion t₂ on the edge, and an externally threaded tip end portion coaxially extending from the small diameter periphery portion. The plug T is arranged to be attached to a plug insertion hole r₁ formed in a cylinder head P.

The plug insertion hole r₁ has an internally threaded portion r₃ adapted to be in threading engagement with the externally threaded tip end portion of the ignition plug T and a plug seat r₂ engageable with the annular stepped portion t₂ of the ignition plug T.

Disposed on the plug seat r₂ is an annular piezoelectric sensor S having an opening whose diameter is greater than that of the small diameter periphery portion of the ignition plug T but smaller than the large diameter periphery portion thereof, so that when the ignition plug T is screwed into the plug insertion hole r₁ the piezoelectric sensor S is tightly pressed between the annular stepped portion t₂ of the ignition plug T and the plug seat r₂ of the plug insertion hole r₁.

The sensor S and the plug insertion hole r₁ are shaped so that when the ignition plug T is screwed for being fitted to the plug hole r₁, part of the outer periphery of the sensor S placed on the plug seat r₂ is brought into engagement with an inside periphery of the plug hole r₁ and is thereby prevented from being further rotated in the screwing direction. Namely, the sensor S has such a portion M in the outer periphery 5a thereof that the distance between the portion M and the rotational axis L is greater than the shortest distance between the inside periphery of the insertion hole r₁ extending from the plug seat r₂ and the rotational axis L.

In the device shown in Figs. 1 and 2, the plug hole r₁ has a circular cross section and has a central axis D₂ which is deviated from the central axis D₁ of the internally threaded portion r₃. The central axis D₁ serves as a rotational axis L of the ignition plug T. The sensor S has a circular outer ring plate 5a₁ whose center axis d₂ is deviated from the center axis d₁ of the inner ring plate 5b. The axes d₁ and d₂ coincide with the axes D₁ and D₂, respectively. Further the diameter of the sensor S is smaller than that of the circular inside periphery r₂₁ extending from the plug seat r₂ but is larger than the shortest distance between the rotation axis L and the inner periphery r₂₁ so that the outer periphery 5a₁ of the sensor S has a portion M which is engageable with the inside peripheral portion r₂₁ of the plug insertion hole r₁ upon rotation thereof about the axis L of the internally threaded portion r₃ of the plug insertion hole r₁.

In the foregoing devices, the rotation of the sensor S is prevented by providing the outer periphery of the sensor S with such a portion M that the distance between the portion M and the axis L of rotation of the plug T is greater than the shortest distance between the axis L and the inside periphery of the plug insertion hole r₁ adjacent to the plug seat r₂ on which the sensor S is disposed.

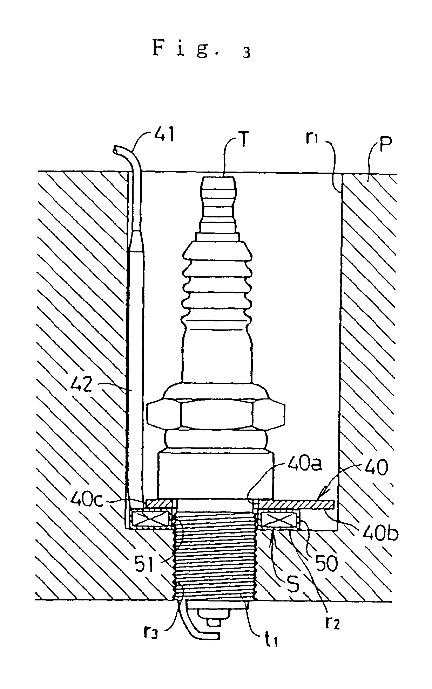

The embodiments of the invention described hereafter utilize a gasket to achieve the above object. Referring to Fig. 3, designated as T is an ignition plug having the same structure as that of the foregoing device. The plug T has an externally threaded tip end portion t₁ which is threadingly engageable with an internally threaded portion r₃ and a stepped portion engageable with a plug seat r₂ provided in a plug insertion hole r₁ formed in a cylinder head P. The plug insertion hole r₁ has a circular inside peripheral portion whose center axis D is deviated from the axis L of the internally threaded portion r₃.

An annular piezoelectric sensor S has a shell 50 composed of concentrical outer side wall and inner side wall defining a hole 51 through which the plug T is inserted. Designated as 42 is a guide pipe through which a lead wire 41 extends. The shell 50 has such an outer diameter as to form a gap between the shell 50 and the inside periphery of the plug insertion hole r₁ through which gap the guide pipe 42 extends. By attaching the ignition plug P to the cylinder head T, the sensor S is tightly held between the annular stepped portion of the ignition plug T and the plug seat r₂.

An annular gasket 40 formed, for example, of copper is interposed between the piezoelectric sensor S and the stepped portion of the ignition plug P. The gasket 40 has a center opening 40a through which the plug T is inserted. The gasket 40 has such a peripheral portion N that the distance between the portion N and the axis L is greater than the shortest distance R between the axis L and the inside periphery of the plug insertion hole r₁.

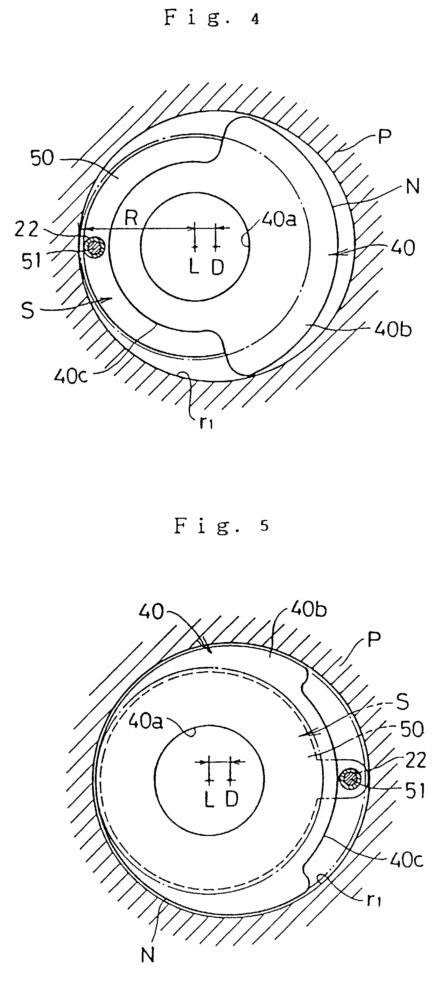

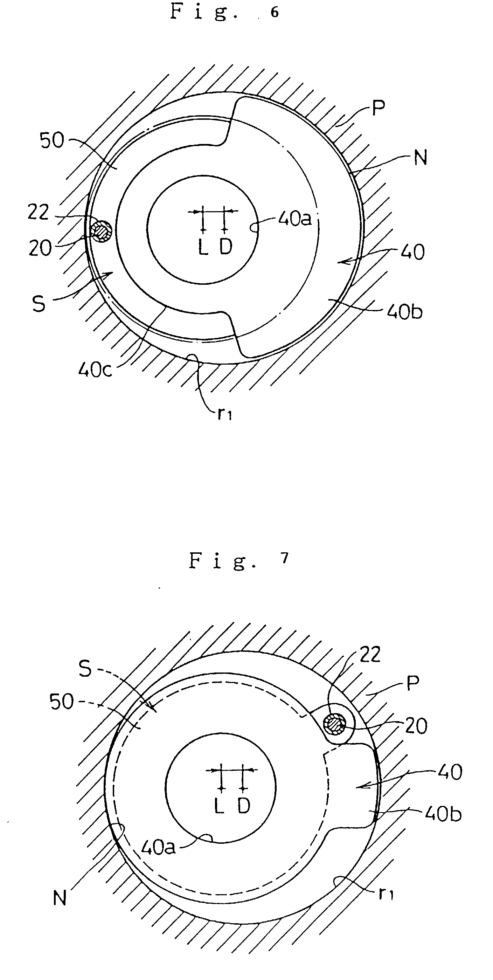

Namely, as shown in Fig. 4 , the gasket 40 has a radially outwardly extending, protruded portion 40b whose periphery N is located outside of a circle having a radius R as shown by a phantom line. As a result, the protruded portion 40b of the gasket 40 is brought into engagement with the circular inside periphery of the plug insertion hole r₁ upon rotation of thereof about the axis L of the internally threaded portion r₃ of the plug insertion hole r₁.

The gasket 40 is also provided with a cut-away portion 40c at such a position that the guide pipe 42 is not engaged by the gasket 40 upon rotation of the gasket 40 during the screwing of the ignition plug T for the attachment thereof to the plug hole r₁. When a hole is provided in the cylinder head P for the passage of the lead wire 41, it is not necessary to form such a cut-away portion 40c.

Thus, when the ignition plug T is screwed for being fitted to the plug hole r₁, the gasket 40 on the sensor S is rotated by frictional contact with the stepped portion of the plug T to cause the portion N of the protruded portion 40b to be brought into engagement with an inside periphery of the plug hole r₁ so that the gasket 40 is prevented from being further rotated in the screwing direction. As a consequence, the sensor S provided below the gasket 40 receive only an axial, pressing force from the rotation of the plug T.

The shape of the gasket 40 is not limited to that shown in Fig. 4 in which the outer periphery N is circular whose center coincides with the center axis L. In the embodiment shown in Fig. 5, the gasket 40 is shaped to have an outer periphery N similar to the inside periphery of the plug insertion hole. In the embodiment shown in Fig. 6, the outer periphery N of the gasket is circular whose center coincides with with the axis D of the plug insertion hole r₁. The gasket of Fig. 7 has a portion N protruded from a circular periphery.

## Claims

1. A device for detecting a change in internal pressure of a cylinder, comprising
a cylinder head (P);
an axially extending ignition plug (T) including a large diameter periphery portion, a small diameter periphery portion extending coaxially from an edge of said large diameter portion to form an annular stepped portion on said edge, and an externally threaded tip end portion (t₁) coaxially extending from said small diameter periphery portion;
a plug insertion hole (r₁) formed in said cylinder head (P) for receiving part of said ignition plug (T) and having an internally threaded portion (r₃) adapted to be in threading engagement with said externally threaded tip end portion (t₁) of said ignition plug (T) and a plug seat (r₂) engageable with said annular stepped portion of said ignition plug (T), said plug insertion hole (r₁) having a circular inside peripheral portion whose center (D) is deviated from the axis (L) of said internally threaded portion of said plug hole (r₃) ; and
an annular piezoelectric sensor (S) disposed on said plug seat (r₂) and having an opening whose diameter is greater than that of said small diameter periphery portion of said ignition plug (T) but smaller than the large diameter periphery portion thereof, so that said ignition plug (T) is capable of being fixed on said cylinder head (P) when screwed into said plug insertion hole (r₁) with said piezoelectric sensor (S) being tightly pressed between said annular stepped portion of said ignition plug (T) and said plug seat (r₂) of said plug insertion hole (r₁) to detect a change in pressure within said cylinder;
characterised in that
an annular gasket (40) is interposed between said piezoelectric sensor (S) and said stepped portion of said ignition plug (T), said annular gasket (40) having such a peripheral portion that the distance between the edge of said peripheral portion at a protruded portion (40b) of said gasket (40) and the axis of said internally threaded portion (r₃) of said plug hole (r₁) is greater than the shortest distance between the axis of said internally threaded portion (r₃) and the circular inside periphery of said plug insertion hole (r₁), so that said protruded portion (40b) of said gasket (40) is brought into engagement with the circular inside periphery of said plug insertion hole (r₁) upon rotation thereof about the axis (L) of said internally threaded portion (r₃) of said plug insertion hole (r₁).

2. A device as set forth in claim 1, further comprising a lead wire (41) electrically connected to said piezoelectric sensor (S), and a guide pipe (42) through which said lead wire (41) extends, said gasket (40) having a cut-away portion at such a position that said guide pipe (42) is not engaged by said gasket (40) upon rotation of said gasket (40) during the screwing of said ignition plug (T) for attachment thereof to said plug hole (r₁).

## Patentansprüche

1. Vorrichtung zum Erfassen der Innendruckänderung eines Zylinders, umfassend:
einen Zylinderkopf (P);
eine axial verlaufende Zündkerze (T), enthaltend
einen Randabschnitt mit großem Durchmesser,
einen Randabschnitt mit kleinem Durchmesser, der sich koaxial von einer Kante des Abschnitts mit großem Durchmesser wegerstreckt und an der Kante einen ringförmigen gestuften Abschnitt bildet, und
einen mit einem Außengewinde versehenen spitzen Endabschnitt (t₁), der sich koaxial vom Abschnitt mit kleinem Durchmesser wegerstreckt;
ein im Zylinderkopf (P) ausgebildetes Kerzenloch (r₁) zum Aufnehmen eines Teils der Zündkerze (T), das einen mit einem Innengewinde versehenen Abschnitt (r₃) aufweist, der so eingerichtet ist, dass er in Gewindeeingriff ist mit dem spitzen, mit einem Außengewinde versehenen Endabschnitt (t₁) der Zündkerze (T) und einen Kerzensitz (r₂), der mit dem ringförmigen gestuften Abschnitt der Zündkerze eingreift, wobei das Zündkerzeneinführloch einen kreisförmigen Innenumfang hat, dessen Mittelpunkt (D) von der Achse (L) des mit einem Innengewinde versehenen Abschnitts des Kerzenlochs (r₃) abweicht; und
einen ringförmigen piezoelektrischen Sensor (S), der auf dem Kerzensitz (r₂) angeordnet ist und eine Öffnung hat, deren Durchmesser größer ist als der Randabschnitt mit kleinem Durchmesser der Zündkerze (T), aber kleiner ist als deren Randabschnitt mit großem Umfangsdurchmesser, so dass die Zündkerze (T) so auf dem Zylinderkopf (P) befestigt werden kann, wenn sie in das Kerzeneinführloch (r₁) eingeschraubt wird, dass der piezoelektrische Sensor (S) zwischen dem ringförmigen gestuften Abschnitt der Zündkerze (T) und dem Kerzensitz (r₂) des Kerzeneinführlochs (r₁) festgepresst und eine Druckänderung in dem Zylinders erfasst wird;
dadurch gekennzeichnet, dass zwischen dem piezoelektrischen Sensor (S) und dem gestuften Abschnitt der Zündkerze (T) eine ringförmige Dichtung (40) zwischengeordnet ist, wobei die ringförmige Dichtung (40) einen solchen Randabschnitt hat, dass der Abstand zwischen der Kante des Randabschnitts am vorstehenden Abschnitt (40b) der Dichtung (40) und der Achse des mit einem Innengewinde versehenen Abschnitts (r₃) des Kerzenlochs (r₁) größer ist als die kürzeste Strecke zwischen der Achse des mit einem Innengewinde versehenen Abschnitts (r₃) und dem kreisförmigen Innenumfang des Kerzeneinführlochs (r₁), so dass der vorstehende Abschnitt (40b) der Dichtung (40) in Eingriff gebracht wird mit dem kreisförmigen Innenumfang des Kerzeneinführlochs (r₁), wenn sie um die Achse (L) des mit einem Innengewinde versehenen Abschnitts (r₃) des Kerzeneinführlochs (r₁) gedreht wird.

2. Vorrichtung nach Anspruch 1, umfassend weiterhin einen Bleidraht (41), der mit dem piezoelektrischen Sensor (S) elektrisch verbunden ist, sowie ein Führungsrohr (42), durch das der Bleidraht (41) geht, wobei die Dichtung (40) einen abgeschnittenen Teil besitzt an einer solchen Stelle, dass das Führungsrohr (42) nicht mit der Dichtung (40) eingreift, wenn die Dichtung (40) gedreht wird beim Einschrauben der Zündkerze (T) zu deren Befestigung in dem Kerzenloch (r₁).

## Revendications

1. Un dispositif pour détecter un changement de pression interne d'un cylindre, comprenant
une tête de cylindre (P) ;
une bougie d'allumage (T) s'étendant axialement et qui comprend une partie périphérique de grand diamètre, une partie périphérique de petit diamètre s'étendant coaxialement depuis un bord de ladite partie de grand diamètre pour former une partie annulaire étagée sur ledit bord, et une partie d'extrémité inférieure filetée extérieurement (t₁) s'étendant coaxialement depuis ladite partie périphérique de petit diamètre ;
un trou d'insertion de bougie (r₁) ménagé dans ladite tête de cylindre (P) pour recevoir une partie de ladite bougie d'allumage (T) et présentant une partie taraudée (r₃) adaptée pour venir en engagement de filetage avec ladite partie d'extrémité inférieure filetée extérieurement (t₁) de ladite bougie d'allumage (T) et un siège de bougie (r₂) pouvant s'engager avec ladite partie annulaire étagée de ladite bougie d'allumage (T), ledit trou d'insertion de bougie (r₁) présentant une partie périphérique intérieure circulaire dont le centre (D) est écarté de l'axe (L) de ladite partie taraudée dudit trou d'insertion (r₃) ; et
un capteur piézoélectrique annulaire (S) disposé sur ledit siège de bougie (r₂) et présentant une ouverture dont le diamètre est supérieur à celui de ladite partie périphérique de petit diamètre de ladite bougie d'allumage (T) mais inférieur à sa partie périphérique de grand diamètre, de sorte que ladite bougie d'allumage (T) peut être fixée sur ladite tête de cylindre (P) quand elle est vissée dans ledit trou d'insertion (r₁), ledit capteur piézoélectrique (S) étant hermétiquement serré entre ladite partie annulaire étagée de ladite bougie d'allumage (T) et ledit siège de bougie (r₂) dudit trou d'insertion de bougie (r₁) pour détecter un changement de pression à l'intérieur dudit cylindre ;
caractérisé en ce que
un joint annulaire (40) est interposé entre ledit capteur piézoélectrique (S) et ladite partie étagée de ladite bougie d'allumage (T), ledit joint annulaire (40) présentant une partie périphérique telle que la distance entre le bord de ladite partie périphérique au niveau d'une partie en saillie (40b) dudit joint (40) et l'axe de ladite partie taraudée (r₃) dudit trou de bougie (r₁) et supérieur à la plus courte distance entre l'axe de ladite partie taraudée (r₃) et la périphérie intérieure circulaire dudit trou d'insertion de bougie (r₁), de sorte que ladite partie en saillie (40b) dudit joint (40) est amenée en prise avec la périphérique intérieure circulaire dudit trou d'insertion de bougie (r₁) lors de sa rotation autour de l'axe (L) de ladite partie taraudée (r₃) dudit trou d'insertion de bougie (r₁).

2. Un dispositif tel qu'énoncé à la revendication 1, comprenant en outre un fil conducteur (41) relié de manière électrique audit capteur piézoélectrique (S), et un conduit de guidage (42) à travers lequel s'étend ledit fil conducteur (41), ledit joint (40) présentant une partie découpée au niveau d'une position telle que ledit conduit de guidage (42) n'est pas engagé par ledit joint (40) lors de la rotation dudit joint (40) pendant le vissage de ladite bougie d'allumage (T) en vue de sa fixation sur ledit trou de bougie (r₁).
